# EUROPEAN PATENT SPECIFICATION

(11) **EP 3 166 561 B1**
(45) Date of publication and mention of the grant of the patent: **06.06.2018**
(21) Application number: 15731308.1
(22) Date of filing: 23.06.2015
(51) Int. Cl.: A61H 23/02

(54) **MASSAGE CONTROL SYSTEM FOR A VEHICLE**
MASSAGEREGELUNGSSYSTEM FÜR EIN FAHRZEUG
SYSTÈME DE COMMANDE DE MASSAGE POUR UN VÉHICULE

(30) Priority: 08.07.2014 GB 201412101
(43) Date of publication of application: 17.05.2017
(73) Proprietor: Jaguar Land Rover Limited, Coventry, Warwickshire CV3 4LF (GB)
(72) Inventor: OSGOOD, Thomas, Coventry Warwickshire CV3 4LF (GB)
(74) Representative: Ditum, Caroline Mary
(86) International application number: PCT/EP2015/064091
(87) International publication number: WO 2016/005181

(56) References cited:
- CN-U- 201 642 738
- JP-A- 2007 313 123
- US-A1- 2006 217 641

## Description

### TECHNICAL FIELD

The present invention relates to a massage control system for a vehicle and in particular a vehicle such as a car other like.

### BACKGROUND

A typical massage system in a vehicle includes a seat having one or more massaging elements embedded therein. The massaging elements include pulsating elements such as inflating bladders controlled by an air compressor. The massaging system would also include an input for inputting a massage setting for control of the pulsating element. The massage setting input for control of the pulsating element is a pulsating setting. The pulsating setting may be an intensity of pulsation. In one case, the intensity of pulsation may range from an intensity of 0 (off) to an intensity of 5, with each incremental intensity level greater than the previous. A seat occupant may input the intensity level of 3 which constitutes the input of a massage setting. The pulsating setting is converted to a demand arranged to configure the pulsating element to pulsate at the desired setting.

In other cases, the massage setting may be more complex and may also relate to location of pulsation, duration of pulsation, or may be a massage programme including a combination of intensity, location and duration of pulsation. In the case of a massage programme constituting the massage setting input, the massage programme input is converted into one or more demands arranged to configure the pulsating elements to pulsate at the intensity, duration, and location governed by the massage setting.

Such systems are onerous for the driver of the vehicle since they must continuously change the inputs.

US 2006/0217641 discloses a programmable massage machine with memory.

It is an object of the present invention to alleviate the aforementioned problem and improve on the prior art.

### SUMMARY OF THE INVENTION

According to an aspect of the present invention there is provided a massage control system for a vehicle, comprising an input for receiving an instruction for control of a massage parameter to a massaging element of the vehicle; a monitoring module arranged to monitor the instruction received by the input over time to determine a massage usage trend; and a control module arranged to receive the massage usage trend and output a massage parameter demand to the massaging element based on the massage usage trend.

Outputting the massage parameter demand based on the massage usage trend allows for the massage system to be controlled automatically by the control module in accordance with the habitual usage of the system.

The input may be arranged to receive a further instruction to change the massage parameter in response to the massage parameter demand, and the monitoring module is arranged to modify the massage usage trend based on the further instruction.

Receiving further instructions allows for the automatic control of the massaging system to be overridden. This is particularly beneficial for occupants who may suffer from conditions having varying levels of discomfort or may desire some variation in the massage.

The monitoring module may be arranged to monitor the frequency of the further instruction for control of the massage parameter in response to the massage parameter demand.

The control module may be arranged to receive driver identification information from a driver identification module, the control module being arranged to determine a massage usage trend for each driver.

Such an arrangement allows for different trends to be built up according to the present driver of the vehicle.

The massage parameter may be selected from the list of intensity of massage, location of pulsation of massage, a massage programme, a time lapse between driver entry to the vehicle and massage initiation, temperature of the massaging element, and static seat deformation.

A trend that can be tailored to each of the aforementioned massage parameters would improve the effect on the user.

The massage control system may comprise an ancillary input for detecting an ancillary parameter, wherein the control module is arranged to determine the massage usage trend also based on the ancillary parameter.

The ancillary parameter may be selected from the list of date, day, time, and duration of journey.

Allowing such ancillary parameters to be incorporated into the trend allows for scenarios where, for example, a Bank Holiday or a weekend day would require different massage settings to an ordinary work day and the output can be tailored accordingly.

The massage usage trend may be determined by a histogram algorithm.

The histogram algorithm may be a Bayesian algorithm. A Bayesian algorithm allows for a highly accurate trend to be built up quicker than any other algorithm types thus placing a less burden on the control module subsequently.

According to a further aspect of the present invention there is provided a massage system comprising the aforementioned massage control coupled to a seat comprising one or more massaging elements, wherein the massage parameter demand is arranged to configure the massaging elements based on the massage usage trend.

According to a further aspect of the present invention there is provided a vehicle comprising the aforementioned massage system.

According to a further aspect of the present invention there is provided a method of operating a massage control system, comprising the steps of;
receiving an instruction for control of a massage parameter;
monitoring the instruction over time and determining a trend of the monitored instruction; and
outputting a massage parameter demand to a massaging element, the demand based on the massage usage trend.

The method may comprise the steps of;
monitoring a further instruction to change a massage parameter in response to a massage parameter demand; and
correcting the massage usage trend based on the further instruction.

### BRIEF DESCRIPTION OF THE FIGURES

One or more embodiments of the invention will now be described, by way of example only, with reference to the accompanying drawings, in which:
Figure 1 shows a schematic massaging system according to the present invention;
Figure 2 shows a perspective view of an arrangement of pulsating elements forming part of the massaging system;
Figure 3 shows a flow diagram of a method of operating the massage control system.

### DETAILED DESCRIPTION

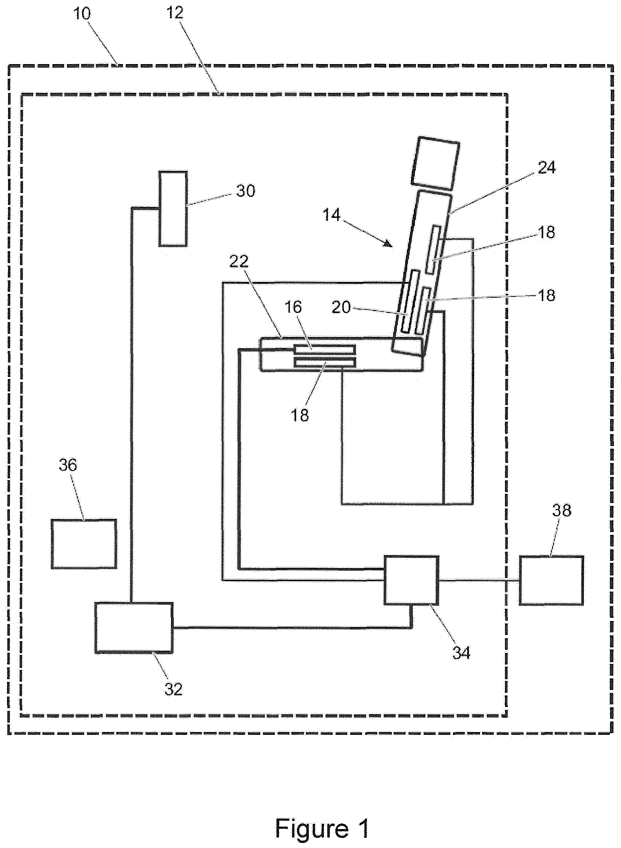

With reference to figure 1, a vehicle 10 such as a car other like includes a massage system 12. The massage system 12 includes a massage control system coupled to a seat 14 and more specifically to massaging elements embedded within the seat 14.

The massaging elements include different categories of massaging elements. One type of massaging element is an inflatable bladder driven by air compressors. Another type of massaging element is a heating element. The heating elements are constructed from a wire which increases in temperature when a voltage is passed across it.

The air bladders are configured to either dynamically deform so to provide a pulsating function or to statically deform to provide, for example, lumber support. The pulsating bags are known as pulsating elements 18 and the static deformation bags are known as support elements 20.

The pulsating elements 18 have a range of pulsating intensity. The range of pulsating intensity is between setting one and setting five. The relative increase in intensity between settings one and five is linear. Figure 1 shows one pulsating element 18 and one heating element 16 in the seat base part 22 of the seat 14. Figure 1 also shows two pulsating elements 18 vertically aligned with each other in addition to a support element 20 in the seat back 24. The vertically aligned pulsating elements 18 provide coverage over most of the seat back 24. The support element 20 is arranged at the lower portion of the seat back 24 so as to provide lumbar support to the occupant when inflated.

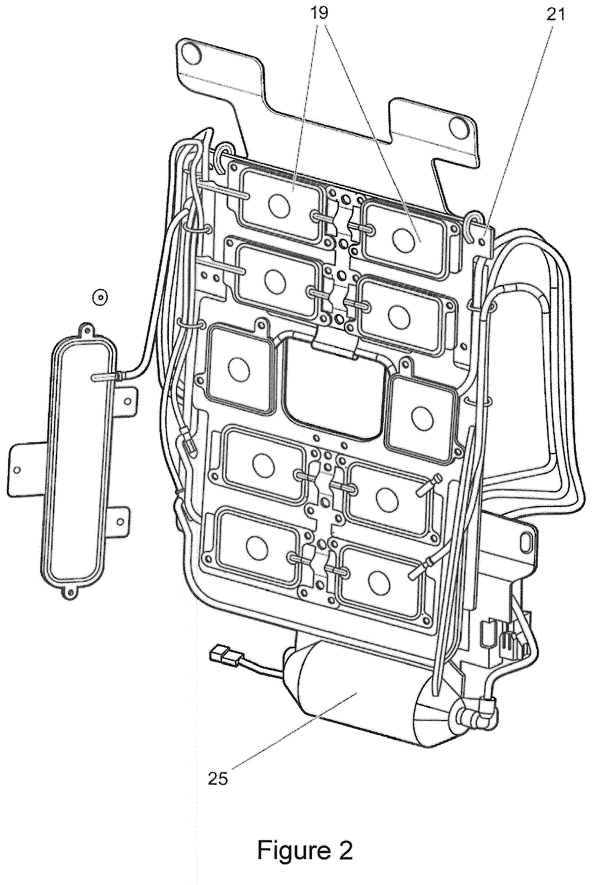

With reference to figures 1 and 2, the number of pulsating, heating and support elements together with their respective locations can be changed according to the seat type and location. In this case, the front seats have five pulsating elements 18 and one of each of the support 20 and heating 16 elements. As shown in figure 2, these five pulsating elements 18 are each divided into a pair of pockets such that there are 10 pulsating air bag pockets 19. These airbags are attached to a frame 21 in the seat back 24 by fasteners. All of the pulsating air bag pockets 19 are driven by a single compressor, or air pump 25. The rear seats on the other hand have one of each of the heating 16, pulsating 18 and support 20 elements. In addition, the pulsating intensity of the pulsating elements 18 may be modified according to the location of the seat and seat type. The front seats in this case have a pulsating setting range from one to five, whereas the back seats have a smaller range of pulsating, namely a single pulsating mode and on off mode.

The massage control system includes an input 30, a monitoring module 32, a control module 34, and an ancillary input 36. The control module 34 is connected to each of the massaging elements by electrical wiring. The control module 34 is connected to the input 30 and the ancillary input 34 by electrical wiring. The control module 34 includes a processor and a memory unit. The memory unit includes a non-volatile memory component. The monitoring module 32 is stored as electronic data on the non-volatile memory component. In this way, the monitoring module 32 is communicatively linked to the input 30 and the ancillary input 36. The processor is arranged to execute the monitoring module 32.

The input 30 is a touch screen arranged on the dashboard of the vehicle. The input 30 allows for the user to input instructions for control of a massage parameter. Massage parameters available to a user to input via the input 30 include intensity of the massage, location of the pulsation of the massage, a time loss between the driver entering the vehicle and massage initiation, temperature of the massaging element, static seat deformation, and a massage program. Each of these massage parameters corresponds to a configuration of one or more of the massaging elements.

The monitoring module 32 is arranged to monitor the instruction received by the input 30 over time and detect a massage usage trend. The massage usage trend is described in more detail below, however, in summary the massage usage trend is determined by a histogram algorithm, namely a Bayesian algorithm.

The control module 34 is arranged to receive the massage usage trend from the monitoring module 32 and output a massage parameter demand to the massaging element based on the massage usage trend. The massage usage trend may evolve over time after initial set up. This is achieved by the monitoring module 32 modifying the massage usage trend based on further instructions received from the input 30 in response to the massage parameter demand sent from the control module 34. Such further instructions are monitored over time. The frequency of change of the massage parameter according to the further inputs received at the input 30 is monitored. Modification of the massage usage trend ceases when the frequency of further instructions falls below a predetermined frequency threshold. This process is described in more detail below.

The ancillary input 36 is arranged to detect an ancillary parameter such as date, day, time of day and the duration of the journey. The monitoring module is arranged to monitor the ancillary inputs in addition to the instructions received from the input 34 and determine the trend based on all of the available inputs. One ancillary input is a calendar which can be read by the monitoring module in order to determine the ancillary parameters of the date, day and time. The calendar may be a calendar contained in another system of the vehicle or may be detected from an external device such as a smart phone other like. The ancillary input may also be a mapping input where the journey play, or route, is determined and the duration of the journey determined accordingly.

The control module 34 is communicatively linked to a driver identification module 38. In this case, the driver identification module 38 is classified as an external module to the massage control system 12. The driver identification module 38 includes a receiver for receiving and detecting a near field communication device such as a key or a key fob. The key or key fob are driver specific. Accordingly, the identification of the driver may be detected by virtue of the presence of the key or key fob. Such information is used by the control module 34 and sent to the monitoring module 32. A massage usage trend can be determined for the identified driver. This is particularly advantageous where there is more than one habitual driver of the vehicle.

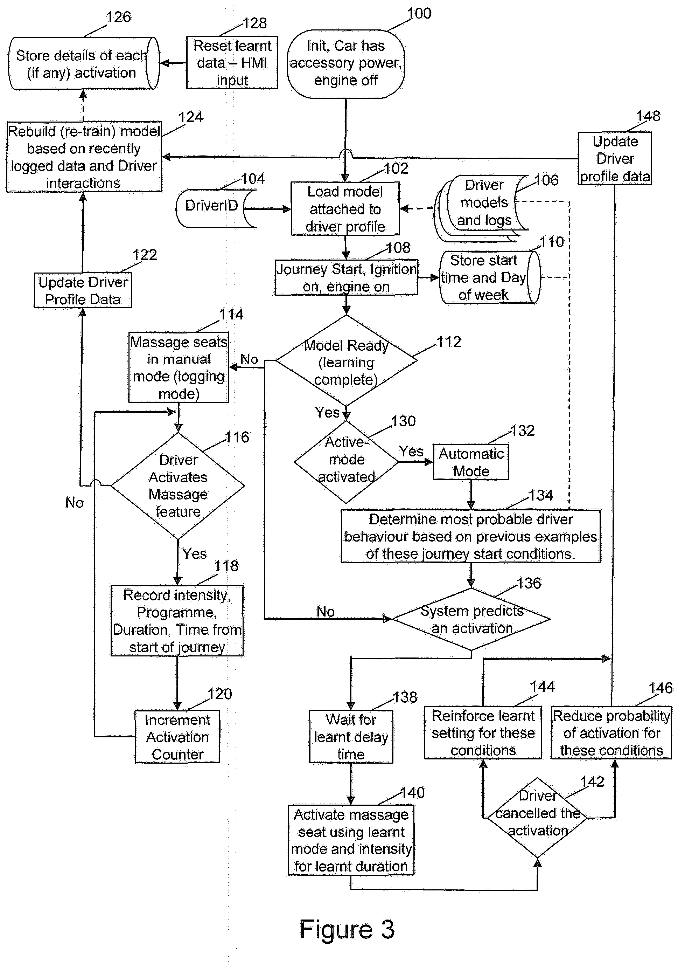

With reference to Figure 3 a method of operating the massage control system is described below. The method for operating the massage control system is described with reference to a scenario where the massage instruction relates to pulsating intensity of the pulsating elements.

The massage control is initiated at block 100. Initiation occurs in response to a driver turning the key such that the car has accessory power but whilst the engine is still off.

The control module then loads the model, or massage usage trend, at block 102. In order to determine the driver specific module or trend, the control module 34 receives the driver ID from the driver identification module 38 as shown at block 104. The control module 34 then executes the model, or massage usage trend, specific to the identified driver as shown at block 106. The journey start time is recorded when the ignition is on as described at block 108. Such information relating to the journey start, namely the start time and day of the week, is stored in the monitoring module at block 110.

At block 112, the control module determines whether the model or massage usage trend is ready or use i.e. whether or not the learning phase is complete. The model is classified as being ready i.e. learning complete, when the massage usage trend has a consistency value above a predetermined consistency threshold and a number learning cycles have been completed. The number of cycles, K, is the number of days which is compared to a cycle count, n, in this case the day number. For K values greater or equal to n, the model is determined to be not ready. For K values less than n the model is determined to be ready subject to the consistency value. Calculation of the consistency value is described subsequently.

For models deemed not to be ready, the massage seats are configured to be in manual mode at block 114. The massage seats configured to manual mode requires instruction for control of a massage parameter to be input by a user on the input 30. Such instructions are detected at block 116. In this way, the method includes the step of receiving instruction for control of the massage parameter. In this case the massage parameter is pulsating intensity of the pulsating element 18. The instruction is monitored at block 118 and an increment activation counter is initiated at block 120. The massage parameter, namely the pulsating intensity is monitored over time by linked back to before the driver activates the massage feature. The instruction data is monitored by monitoring module and the massage usage trend is determined according to the instructions at blocks 122 and 124.

The Bayesian algorithm which governs the massage usage trend, in this case monitors the intensity of the pulsation. The pulsating intensity is monitored for each cycle count, n. The intensity values are fit to a curve best fit. For routine use of the massaging functions, the fit will be heavily biased to a particular intensity value, in this case three out of five. However, more irregular usage would include some outlying values. Prior to fitting the recorded values to the curve, any outlying values are removed so as not to distort the curve of best fit. Next, the peak value of the curve is determined. The peak value in this case corresponds to the most used intensity value, namely three out of five.

The consistency threshold is determined next by calculating the area under the curve of best fit involving intensity levels of the peak value plus or minus 1 intensity level. In other words, the area under the curve between the limits of intensity level 2 to intensity level 4. The consistency value is compared to a predetermined consistency threshold.

An intensity value for each cycle, n, is monitored by the monitoring module 32 at blocks 126 and 128. The cycle continues back to block 112 until the consistency value is greater than or equal to the consistency threshold and n is greater than K.

The control module then proceeds to block 130 where the automatic mode is activated. The automatic mode is indicated as being on at block 132. This is in the form of an illuminated symbol on the touch screen of the input. The massage usage trend is loaded at blocks 134 and 136. The control module initiates the massage after a typical time lapse between driver entry to the vehicle and massage initiation as per block 138. A massage parameter demand is output to a massaging element, in this case the pulsating element, at block 140 with the demand being based on the massage usage trend.

The massage usage trend is arranged to evolve, or to be modified, during an initial learning phase since further instructions to change the pulsating intensity in response to pulsating of the pulsating elements are monitored by the monitoring module 32, as shown at block 142. The massage usage trend is corrected based on these further instructions as per blocks 144 and 146. The frequency of the further instructions is also monitored. Further instructions below a predetermined frequency are ignored. In this way, the trend is not affected by one off inputs which may erroneously input.

The same philosophy can be used where the massage parameter is or includes location of pulsation of massage, massage program, a time lapse between driver entry to the vehicle and massage initiation and temperature of the massaging elements, and static seat deformation. The location of pulsation of massage can be controlled by outputting a massage parameter demand to specific pulsating elements only. The vehicle can include pre-set programs for various massage cycles. These massage programs can be monitored and a massage usage trend built up accordingly based on usage of the cycle or cycles. The temperature of the massaging element can be controlled by outputting a massage parameter demand to the heating element to increase or decrease the temperature of the seat. The static seat deformation can be controlled by outputting a massage parameter demand to inflate or deflate the support elements to provide additional support at various parts of the seat for different parts of the driver's typical journey. This may be used for increased lumber support for longer journeys. Any combination of these massage parameters can be included in the trend using the Bayesian algorithm as described before.

## Claims

1. A massage control system for a vehicle (10), comprising;
an input (30) for receiving an instruction for control of a massage parameter to a massaging element (16, 18, 20) of the vehicle (10); **characterized in that** it further comprises:
a monitoring module (32) arranged to monitor the instruction received by the input (30) over time to determine a massage usage trend; and
a control module (34) arranged to receive the massage usage trend and output a massage parameter demand to the massaging element (16, 18, 20) based on the massage usage trend.

2. The massage control system of claim 1 wherein the input (30) is arranged to receive a further instruction to change the massage parameter after output of the massage parameter demand, and the monitoring module (32) is arranged to modify the massage usage trend based on the further instruction.

3. The massage control system of claim 2 wherein the monitoring module (32) is arranged to monitor the frequency of the further instruction for control of the massage parameter in response to the massage parameter demand.

4. The massage control system of any preceding claim wherein the control module (34) is arranged to receive driver identification information from a driver identification module (38), the control module (34) being arranged to determine a massage usage trend for each driver.

5. The massage control system of any preceding claim wherein the massage parameter is selected from the list of intensity of massage, location of pulsation of massage, a massage programme, a time lapse between driver entry to the vehicle and massage initiation, temperature of the massaging element (16, 18, 20), and static seat deformation.

6. The massage control system of any preceding claim comprising an ancillary input (36) for detecting an ancillary parameter, wherein the control module (34) is arranged to determine the massage usage trend also based on the ancillary parameter.

7. The massage control system of claim 6 wherein the ancillary parameter is selected from the list of date, day, and time.

8. The massage control system of any preceding claim wherein the massage usage trend is determined by a histogram algorithm.

9. The massage control system of claim 8 wherein the histogram algorithm is a Bayesian algorithm.

10. A massage system (12) comprising a massage control system of any preceding claim coupled to a seat (14) comprising one or more massaging elements (16, 18, 20), wherein the massage parameter demand is arranged to configure the massaging elements (16, 18, 20) based on the massage usage trend.

11. A vehicle (10) comprising the massage system (12) of claim 10.

12. A method of operating a massage control system, comprising;
receiving an instruction for control of a massage parameter; **characterized by** further comprising:
monitoring the instruction over time and determining a trend of the monitored instruction; and
outputting a massage parameter demand to a massaging element (16, 18, 20), the demand based on the massage usage trend.

13. The method of claim 12 further comprising;
monitoring a further instruction to change a massage parameter in response to a massage parameter demand; and
correcting the massage usage trend based on the further instruction.

## Patentansprüche

1. Massagesteuersystem für ein Fahrzeug (10), Folgendes umfassend:
eine Eingabe (30) zum Empfangen einer Anweisung zum Steuern eines Massageparameters an ein Massageelement (16, 18, 20) des Fahrzeugs (10);
**dadurch gekennzeichnet, dass** es ferner Folgendes umfasst:
ein Überwachungsmodul (32), angeordnet, um die im Verlauf der Zeit über die Eingabe (30) empfangene Anweisung zu überwachen, um einen Massageverwendungstrend zu bestimmen; und
ein Steuermodul (34), angeordnet, um den Massageverwendungstrend zu empfangen und eine Massageparameteranforderung an das Massageelement (16, 18, 20) auf der Basis des Massageverwendungstrends auszugeben.

2. Massagesteuersystem nach Anspruch 1, wobei die Eingabe (30) angeordnet ist, um eine weitere Anweisung zu empfangen, um den Massageparameter nach der Ausgabe der Massageparameteranforderung zu ändern, und wobei das Überwachungsmodul (32) angeordnet ist, den Massageverwendungstrend auf der Basis einer weiteren Anweisung zu modifizieren.

3. Massagesteuersystem nach Anspruch 2, wobei das Überwachungsmodul (32) angeordnet ist, die Frequenz der weiteren Anweisung zum Steuern des Massageparameters als Reaktion auf die Massageparameteranforderung zu überwachen.

4. Massagesteuersystem nach einem der vorhergehenden Ansprüche, wobei das Steuermodul (34) angeordnet ist, Fahreridentifikationsinformationen von einem Fahreridentifikationsmodul (38) zu empfangen, wobei das Steuermodul (34) angeordnet ist, einen Massageverwendungstrend für jeden Fahrer zu bestimmen.

5. Massagesteuersystem nach einem der vorhergehenden Ansprüche, wobei der Massageparameter ausgewählt ist von der Liste aus der Intensität der Massage, der Stelle der pulsierenden Bewegung der Massage, einem Massageprogramm, einem Zeitraum zwischen dem Fahrereinstieg in das Fahrzeug und dem Beginn der Massage, einer Temperatur des Massageelements (16, 18, 20) und statischer Sitzverformung.

6. Massagesteuersystem nach einem der vorhergehenden Ansprüche, eine Hilfseingabe (36) zum Erfassen eines Hilfsparameters umfassend, wobei das Steuermodul (34) angeordnet ist, den Massageverwendungstrend ebenfalls auf der Basis des Hilfsparameters zu bestimmen.

7. Massagesteuersystem nach Anspruch 6, wobei der Hilfsparameter ausgewählt ist von der Liste aus Datum, Tag und Zeit.

8. Massagesteuersystem nach einem der vorhergehenden Ansprüche, wobei der Massageverwendungstrend durch einen Säulendiagramm-Algorithmus bestimmt wird.

9. Massagesteuersystem nach Anspruch 8, wobei der Säulendiagramm-Algorithmus ein Bayes-Algorithmus ist.

10. Massagesystem (12), ein Massagesteuersystem nach einem der vorhergehenden Ansprüche umfassend, das an einen Sitz (14) gekoppelt ist, der ein oder mehrere Massageelemente (16, 18, 20) umfasst, wobei die Massageparameteranforderung angeordnet ist, die Massageelemente (16, 18, 20) auf der Basis des Massageverwendungstrends zu konfigurieren.

11. Fahrzeug (10), das Massagesystem (12) nach Anspruch 10 umfassend.

12. Verfahren zum Betreiben eines Massagesteuersystems, Folgendes umfassend:
Empfangen einer Anweisung zum Steuern eines Massageparameters;
gekennzeichnet ferner durch das Umfassen von:
Überwachen der Anweisung im Verlauf der Zeit und Bestimmen eines Trends für die überwachte Anweisung; und
Ausgeben einer Massageparameteranforderung an ein Massageelement (16, 18, 20), wobei die Anforderung auf dem Massageverwendungstrend basiert.

13. Verfahren nach Anspruch 12, ferner umfassend:
Überwachen einer weiteren Anweisung, um einen Massageparameter in Reaktion auf eine Massageparameteranforderung zu ändern; und
Korrigieren des Massageverwendungstrends auf der Basis der weiteren Anweisung.

## Revendications

1. Système de commande de massage pour un véhicule (10) comprenant :
une entrée (30) pour recevoir une instruction pour la commande d'un paramètre de message pour un élément de massage (16, 18, 20) du véhicule (10) ;
**caractérisé en ce qu'**il comprend en outre :
un module de surveillance (32) agencé pour surveiller l'instruction reçue par l'entrée (30) dans le temps afin de déterminer une tendance d'utilisation de massage ; et
un module de commande (34) agencé pour recevoir la tendance d'utilisation de massage et délivrer une demande de paramètre de massage à l'élément de massage (16, 18, 20) sur la base de la tendance d'utilisation de massage.

2. Système de commande de massage selon la revendication 1, l'entrée (30) étant agencée pour recevoir une instruction supplémentaire afin de modifier le paramètre de massage après la délivrance de la demande de paramètre de massage, et le module de surveillance (32) étant agencé pour modifier la tendance d'utilisation de massage sur la base de l'instruction supplémentaire.

3. Système de commande de massage selon la revendication 2, le module de surveillance (32) étant agencé pour surveiller la fréquence de l'instruction supplémentaire pour la commande du paramètre de massage en réponse à la demande de paramètre de massage.

4. Système de commande de massage selon une quelconque revendication précédente, le module de commande (34) étant agencé pour recevoir des informations d'identification de conducteur à partir d'un module d'identification de conducteur (38), le module de commande (34) étant agencé pour déterminer une tendance d'utilisation de massage pour chaque conducteur.

5. Système de commande de massage selon une quelconque revendication précédente, le paramètre de massage étant sélectionné à partir de la liste constituée de l'intensité de massage, de l'emplacement de pulsation de massage, d'un programme de massage, d'un intervalle de temps entre l'entrée du conducteur dans le véhicule et le début du massage, de la température de l'élément de massage (16, 18, 20) et de la déformation de siège statique.

6. Système de commande de massage selon une quelconque revendication précédente comprenant une entrée auxiliaire (36) pour détecter un paramètre auxiliaire, le module de commande (34) étant agencé pour déterminer la tendance d'utilisation de massage également sur la base du paramètre auxiliaire.

7. Système de commande de massage selon la revendication 6, le paramètre auxiliaire étant sélectionné à partir de la liste constituée de la date, du jour et de l'heure.

8. Système de commande de massage selon une quelconque revendication précédente, la tendance d'utilisation de massage étant déterminée par un algorithme d'histogramme.

9. Système de commande de massage selon la revendication 8, l'algorithme d'histogramme étant un algorithme bayésien.

10. Système de massage (12) comprenant un système de commande de massage selon une quelconque revendication précédente couplé à un siège (14) comprenant un ou plusieurs éléments de massage (16, 18, 20), la demande de paramètre de massage étant agencée pour configurer les éléments de massage (16, 18, 20) sur la base de la tendance d'utilisation de massage.

11. Véhicule (10) comprenant le système de massage (12) selon la revendication 10.

12. Procédé de fonctionnement d'un système de commande de massage comprenant :
la réception d'une instruction pour la commande d'un paramètre de massage ;
**caractérisé en ce qu'**il comprend en outre :
la surveillance de l'instruction dans le temps et la détermination d'une tendance de l'instruction surveillée ; et
la délivrance d'une demande de paramètre de massage à un élément de massage (16, 18, 20), la demande étant basée sur la tendance d'utilisation de massage.

13. Procédé selon la revendication 12 comprenant en outre :
la surveillance d'une instruction supplémentaire pour modifier un paramètre de massage en réponse à une demande de paramètre de massage ; et
la correction de la tendance d'utilisation de massage sur la base de l'instruction supplémentaire.
